# EUROPÄISCHE PATENTSCHRIFT

(11) **EP 3 686 406 B1**
(45) Veröffentlichungstag und Bekanntmachung des Hinweises auf die Patenterteilung: **17.02.2021**
(21) Anmeldenummer: 20151868.5
(22) Anmeldetag: 15.01.2020
(51) Int. Cl.: F01N 3/20, F01N 3/28

(54) **MISCHER**
MIXER
MÉLANGEUR

(30) Priorität: 24.01.2019 DE 102019101678
(43) Veröffentlichungstag der Anmeldung: 29.07.2020
(73) Patentinhaber: Eberspächer Exhaust Technology GmbH, 66539 Neunkirchen (DE)
(72) Erfinder: Kurpejovic, Enver, 73230 Kirchheim unter Teck (DE)
(74) Vertreter: Ruttensperger Lachnit Trossin Gomoll

(56) Entgegenhaltungen:
- EP-A1- 3 346 104
- CN-A- 106 523 091
- CN-A- 107 131 031
- CN-A- 107 165 707
- US-A1- 2015 071 825
- US-A1- 2016 361 694

## Beschreibung

Die vorliegende Erfindung betrifft einen Mischer zur Durchmischung von in einem Abgaskanal einer Brennkraftmaschine strömendem Abgas mit in den Abgaskanal eingespritztem Reaktionsmittel.

Ein derartiger Mischer ist aus der EP 3 216 992 A1 bekannt. Dieser aus zwei miteinander verbundenen Blech-Formteilen aufgebaute Mischer weist eine allgemein scheibenartige Gestalt mit an die Innenumfangskontur eines diesen aufnehmenden und einen Abgaskanal umgrenzenden Abgasrohrs angepasster kreisrunder Außenumfangskontur auf. Die beiden Blech-Formteile des Mischers begrenzen zusammen einen Reaktionsmittel-Aufnahmekanal, in welchen durch eine Reaktionsmittel-Abgabeanordnung Reaktionsmittel eingespritzt wird, sowie zwei von dem Reaktionsmittel-Aufnahmekanal im Wesentlichen zueinander entgegengesetzt weg führende Abgabekanäle. In jedem der beiden Blech-Formteile des Mischers ist eine Mehrzahl von Öffnungen vorgesehen, durch welche hindurch im Falle des in Richtung stromaufwärts orientierten Blech-Formteils Abgas in den Reaktionsmittel-Aufnahmekanal sowie die Abgabekanäle einströmen kann und im Falle des in Richtung stromabwärts orientierten Blech-Formteils ein im Mischer erzeugtes Gemisch aus Abgas und Reaktionsmittel, beispielsweise eine Harnstoff/WasserLösung, zu dem stromabwärts des Mischers verlaufenden Abschnitt des Abgaskanals und einer darin angeordneten SCR-Katalysatoranordnung austreten kann.

Ein Mischer gemäß dem Oberbegriff des Anspruchs 1 ist aus der CN 107 131 031A bekannt. Bei diesem bekannten Mischer geht der Abgas-Sammelkanal in einem bogenförmigen und eine Biegung von etwa 90° bereitstellenden Bereich in ein Kanalgehäuse über. In dem bogenförmigen Bereich des Kanalgehäuses ist ein Reaktionsmittel-Aufnahmekanal gebildet, in welchen Reaktionsmittel eingespritzt wird.

Die CN 107 165 707 A offenbart einen Mischer, in welchem stromaufwärts und stromabwärts eines in einem Abgaskanal angeordneten und Reaktionsmittel aufnehmenden Gehäuses plattenartige Körper angeordnet sind. In diesen sind Öffnungen zum Hindurchtritt von Abgas bzw. des Gemisches aus Abgas und Reaktionsmittel vorgesehen.

Die EP 3 346 104 A1 offenbart eine Abgasanlage für eine Brennkraftmaschine, bei welcher in einem Bereich, in welchem Reaktionsmittel in den Abgasstrom eingespritzt wird, eine Reaktionsmittelauffanganordnung mit einer Mehrzahl von mit Reaktionsmittel benetzbaren Auffangflächen vorgesehen ist.

Die CN 106 523 091A offenbart einen Mischer, bei welchem ein Reaktionsmittel aufnehmendes Gehäuse sich in den in einem Abgasrohr gebildeten Abgaskanal hinein erstreckt. Stromabwärts dieses Gehäuses ist eine Ablenkplatte angeordnet, an welcher eine Mehrzahl von Durchtrittsschlitzen und diesen jeweils zugeordneten Strömungsablenkelementen ausgebildet ist.

Die US 2016/0361694 A1 offenbart einen Abgasmischer mit zwei in Strömungsrichtung aufeinanderfolgenden, jeweils Durchtrittsöffnungen aufweisenden Platten. Zwischen diesen beiden Platten ist eine dritte Platte angeordnet, welche einen zentralen Durchtrittsbereich mit zylindrischer oder trichterartiger Struktur aufweist.

Die US 2015/0071825 A1 offenbart einen Mischer für eine Abgasanlage, bei welchem in ein von einem Bodenbereich eines Kanalgehäuses sich erstreckendes Reaktionsmittelaufnahmegehäuse Reaktionsmittel eingespritzt wird. Das Reaktionsmittelaufnahmegehäuse weist Durchtrittsöffnungen zum Eintritt von Abgas in dieses auf.

Es ist die Aufgabe der vorliegenden Erfindung, einen Mischer bereitzustellen, mit welchem bei kompakter und einfacher Bauart eine effiziente Durchmischung von Abgas und Reaktionsmittel erreicht wird.

Erfindungsgemäß wird diese Aufgabe gelöst durch einen Mischer zur Durchmischung von in einem Abgaskanal einer Brennkraftmaschine strömendem Abgas mit in den Abgaskanal eingespritztem Reaktionsmittel, umfassend:
- einen plattenartigen Abgas-Sammelkörper mit einer Anströmfläche an einer Abgasanströmseite und einer von der Anströmseite abgewandten Rückseite,
- ein an der Rückseite des Abgas-Sammelkörpers angeordnetes Kanalgehäuse mit einem Reaktionsmittelaufnahmekanal und wenigstens einem von dem Reaktionsmittelaufnahmekanal weg führenden Abgabekanal in dem Kanalgehäuse,
wobei in dem Abgas-Sammelkörper eine Abgas-Sammelöffnung ausgebildet ist, und wobei ein Abgas-Sammelkanal von der Abgas-Sammelöffnung zu dem Kanalgehäuse führt und zu dem Reaktionsmittel-Aufnahmekanal offen ist.

Für eine effiziente Vermischung von Abgas und Reaktionsmittel und eine gleichmäßige Abgabe in einen stromabwärts folgenden Bereich eines den Mischer aufnehmenden Abgaskanals ist erfindungsgemäß vorgesehen, dass das Kanalgehäuse eine U-förmige oder bogensegmentförmige Gestalt aufweist mit einem im Wesentlichen den Reaktionsmittel-Aufnahmekanal bereitstellenden Gehäuse-Scheitelbereich und zwei an den Gehäuse-Scheitelbereich anschließenden und jeweils einen Abgabekanal bereitstellenden Gehäuse-Kanalbereichen, und dass der Abgas-Sammelkanal im Gehäuse-Scheitelbereich zu dem Reaktionsmittel-Aufnahmekanal offen ist. Der Gehäuse-Scheitelbereich kann also einem Verbindungssteg einer im Wesentlichen U-förmigen Gestalt entsprechen, während die Abgabekanäle den beiden an den Verbindungssteg anschließenden U-Schenkeln entsprechen können. Es ist zu betonen, dass, abhängig vom Krümmungsradius des Gehäuse-Scheitelbereichs, dies auch einer näherungsweise V-förmigen Gestalt entsprechen kann, oder dass die gekrümmte Gestalt im Gehäuse-Scheitelbereich sich bis in die Abgabekanäle bzw. die U-Schenkel hinein mit beispielsweise im Wesentlichen konstantem oder abnehmendem Krümmungsradius fortsetzen kann.

Der erfindungsgemäße Mischer kann ohne komplexe Formgebung der einzelnen Bauteile desselben eine effiziente Durchmischung von Abgas und Reaktionsmittel insbesondere dadurch bereitstellen, dass eine systematische Aufteilung in einen im Wesentlichen den plattenartig, also als Platte ausgebildeten Abgas-Sammelkörper und den Abgas-Sammelkanal umfassenden Bereich und einen im Wesentlichen das Kanalgehäuse umfassenden Bereich vorgesehen ist. Jeder dieser beiden vorzugsweise getrennt voneinander aufgebauten Bereiche kann für sich mit vergleichsweise einfacher Formgebung bereitgestellt bzw. an die durch diesen zu erfüllende Aufgabe angepasst werden.

Insbesondere dann, wenn der erfindungsgemäße Mischer in einem Abgaskanal mit runder Umfangskontur anzuordnen ist, ist es für eine effiziente Einleitung von Abgas in das Kanalgehäuse besonders vorteilhaft, wenn der Abgas-Sammelkörper eine runde, vorzugsweise kreisrunde, Außenumfangskontur aufweist. Weiter kann vorgesehen sein, dass die Abgas-Sammelöffnung bezüglich einer Plattenmitte des Abgas-Sammelkörpers zu einem Plattenrand des Abgas-Sammelkörpers hin versetzt angeordnet ist, so dass das an der Rückseite des Abgas-Sammelkörpers vorgesehene Kanalgehäuse problemlos in dem von der Umfangskontur des Abgas-Sammelkörpers überdeckten Bereich angeordnet werden kann und nicht über diese Umfangskontur hervorsteht. Weiter wird für einen einfach zu realisierenden Aufbau vorgeschlagen, dass das Kanalgehäuse in Abstand zu der Rückseite des Abgas-Sammelkörpers angeordnet ist.

Um bei definierter Strömungsführung einen geringen Strömungswiderstand beim Leiten des Abgasstroms in Richtung zum Kanalgehäuse zu erreichen, wird vorgeschlagen, dass eine Sammelkanal-Umfangswand des Abgas-Sammelkanals in einem abgerundeten Übergangsbereich in den plattenartigen Abgas-Sammelkörper übergeht.

Dabei kann für einen einfach zu realisierenden Aufbau wenigstens ein Teil des Übergangsbereichs, vorzugsweise der gesamte Übergangsbereich, mit dem Abgas-Sammelkörper einstückig ausgebildet sein.

Insbesondere dann, wenn die Sammelkanal-Umfangswand vergleichsweise kurz gestaltet ist und beispielsweise beim Umformen eines Rohlings zum Erhalt des Abgas-Sammelkörpers aus dem zuvor im Bereich der Abgas-Sammelöffnung liegenden Aufbaumaterial geformt werden kann, wird für einen einfachen Aufbau weiter vorgeschlagen, dass wenigstens ein Teil des Übergangsbereichs, vorzugsweise der gesamte abgerundete Übergangsbereich mit der Sammelkanal-Umfangswand einstückig ausgebildet ist. Somit kann der Abgas-Sammelkörper mit dem Übergangsbereich und zumindest einem Teil der Sammelkanal-Umfangswand einstückig, also aus einem Materialblock aufgebaut und nicht aus mehreren Teilen zusammengesetzt, ausgebildet sein. Alternativ ist es möglich, zumindest einen Teil des Übergangsbereichs als Bestandteil der Sammelkanal-Umfangswand oder nur die Sammelkanal-Umfangswand als beispielsweise im Wesentlichen zylindrisches Bauteil vom Abgas-Sammelkörper und dem Übergangsbereich getrennt auszubilden und mit diesem materialschlüssig, beispielsweise durch Verschweißen, zu verbinden.

Eine Sammelkanal-Mittenachse des Abgas-Sammelkanals kann im Wesentlichen orthogonal zu der Anströmfläche sein.

Zur Verbindung einer allgemein auch als Injektor bezeichneten Reaktionsmittel-Abgabeanordnung mit dem Kanalgehäuse wird vorgeschlagen, dass im Scheitelbereich ein im Bereich einer Reaktionsmittel-Aufnahmeöffnung des Kanalgehäuses zu dem Reaktionsmittel-Aufnahmekanal offener Reaktionsmittel-Abgabestutzen am Kanalgehäuse angeordnet ist.

Für eine effiziente Zusammenführung des durch die Abgas-Sammelöffnung geleiteten Abgasstroms und des in den Reaktionsmittel-Aufnahmekanal eingespritzten Reaktionsmittels wird weiter vorgeschlagen, dass eine Abgabestutzen-Mittenachse des Reaktionsmittel-Abgabestutzens und eine Sammelkanal-Mittenachse des Abgas-Sammelkanals zueinander im Wesentlichen orthogonal sind oder/und in einer Ebene liegen.

Eine kompakte Bauart des Mischers kann dadurch unterstützt werden, dass eine eine Abgabekanal-Mittenachse des wenigstens einen Abgabekanals enthaltende Gehäuse-Mittenebene des Kanalgehäuses zu der Anströmfläche im Wesentlichen parallel ist.

In dem Abgas-Sammelkanal kann wenigstens ein, vorzugsweise eine Mehrzahl von in den Reaktionsmittel-Aufnahmekanal sich hinein erstreckenden, plattenartigen Reaktionsmittel-Aufnahmeelementen vorgesehen sein. Auf dieses bzw. diese Reaktionsmittel-Aufnahmeelemente kann das in Tröpfchenform in den Reaktionsmittel-Abgabekanal eingespritzte Reaktionsmittel auftreffen. Da die Oberflächen der Reaktionsmittel-Aufnahmeelemente von heißem Abgas umströmt werden, verdampft das auf diese auftreffende Reaktionsmittel und wird unmittelbar durch die Reaktionsmittel-Aufnahmekanäle umströmendes Abgas mitgeführt und mit diesem vermischt.

Um dabei eine große mit Reaktionsmittel benetzbare Oberfläche bereitzustellen, wird vorgeschlagen, dass in dem Abgas-Sammelkanal eine Mehrzahl von in Richtung von der Reaktionsmittel-Aufnahmeöffnung weg aufeinander folgend angeordneten Reaktionsmittel-Aufnahmeelementen vorgesehen ist, und dass eine Eingriffstiefe der Reaktionsmittel-Aufnahmeelemente in den Reaktionsmittel-Aufnahmekanal in Richtung von der Reaktionsmittel-Aufnahmeöffnung weg bis zu einem Reaktionsmittel-Aufnahmeelement mit maximaler Eingriffstiefe zunimmt.

Für einen einfach herstellbaren, gleichwohl thermisch stabilen Aufbau kann vorgesehen sein, dass der Abgas-Sammelkörper als Blech-Formteil bereitgestellt ist, oder/und dass das Kanalgehäuse mit wenigstens zwei, vorzugsweise drei Blech-Formteilen bereitgestellt ist, oder/und dass eine den Abgas-Sammelkanal umgebende Sammelkanal-Umfangswand mit wenigstens einem Blech-Formteil bereitgestellt ist.

Die vorliegende Erfindung betrifft ferner eine Abgasanlage für eine Brennkraftmaschine, umfassend einen Abgasführungskanal, einen in dem Abgasführungskanal angeordneten, erfindungsgemäß aufgebauten Mischer und eine Reaktionsmittel-Abgabeanordnung zum Abgeben von Reaktionsmittel in den Reaktionsmittel-Aufnahmekanal des Mischers.

Um im Wesentlichen das gesamte den Abgaskanal durchströmende Abgas zur Durchmischung mit Reaktionsmittel nutzen zu können, wird vorgeschlagen, dass der Abgas-Sammelkörper mit seiner Anströmfläche im Wesentlichen orthogonal zu einer Abgas-Hauptströmungsrichtung im Abgaskanal angeordnet ist, oder/und dass der Abgas-Sammelkörper den Abgaskanal in einem den Mischer aufnehmenden Gehäuse quer zu der Abgas-Hauptströmungsrichtung im Wesentlichen vollständig überdeckt.

Zur Abgasbehandlung kann in der Abgasanlage stromaufwärts des Mischers eine Oxidationskatalysatoranordnung, vorzugsweise Diesel-Oxidationskatalysatoranordnung, vorgesehen sein. Ferner kann stromabwärts des Mischers eine SCR-Katalysatoranordnung oder/und eine Partikelfilteranordnung vorgesehen sein.

Die vorliegende Erfindung wird nachfolgend mit Bezug auf die beiliegenden Figuren beschrieben. Es zeigt:
- Fig. 1: einen Mischer in perspektivischer Darstellung;
- Fig. 2: den Mischer der Fig. 1 in Verbindung mit weiteren Komponenten einer Abgasanlage;
- Fig. 3: eine Längsschnittansicht einer den Mischer der Fig. 1 enthaltenden Abgasanlage;
- Fig. 4: eine der Fig. 1 entsprechende Darstellung einer alternativen Ausgestaltungsart eines Mischers;
- Fig. 5: den Mischer der Fig. 4 in Verbindung mit weiteren Komponenten einer Abgasanlage.

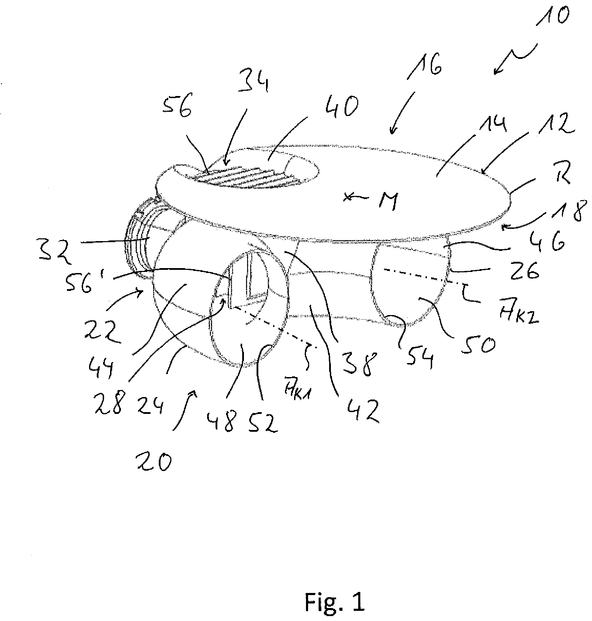

In Fig. 1 ist ein Mischer für eine Abgasanlage einer Brennkraftmaschine allgemein mit 10 bezeichnet. Der Mischer umfasst einen in wesentlichen Bereichen als im Wesentlichen ebene, also ungekrümmte Platte ausgebildeten Abgas-Sammelkörper 12. Der Abgas-Sammelkörper 12 weist eine in Fig. 1 nach oben orientiert dargestellte Anströmfläche 14 an einer Anströmseite 16 auf und weist eine in Fig. 1 nach unten orientierte Rückseite 18 auf.

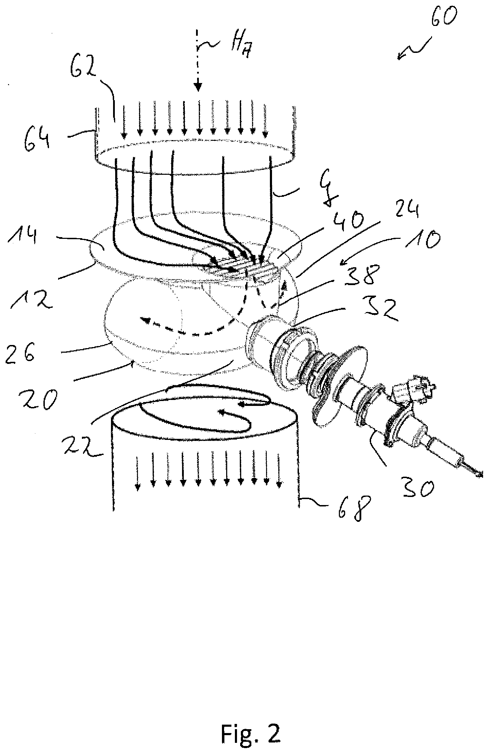

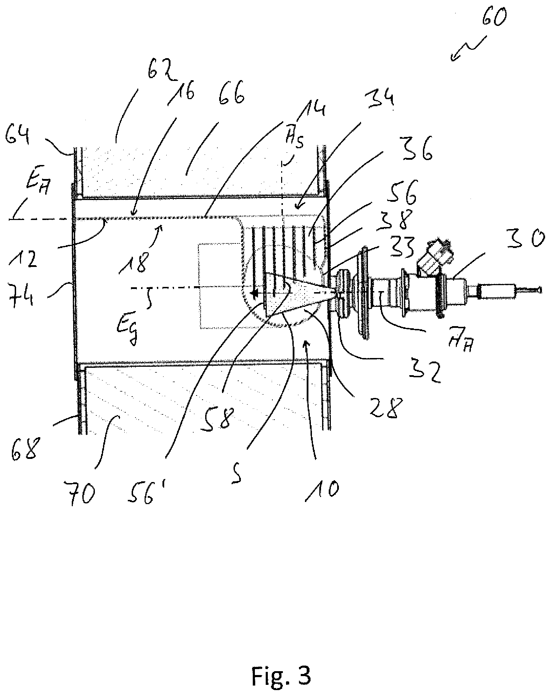

An der Rückseite 18 des Abgas-Sammelkörpers 12 ist ein allgemein mit 20 bezeichnetes Kanalgehäuse angeordnet. Das Kanalgehäuse 20 weist einen bogensegmentförmige bzw. U-förmige Gestalt auf mit einem einem Verbindungssteg einer U-förmigen Gestalt entsprechenden Gehäuse-Scheitelbereich 22 und an dem Gehäuse-Scheitelbereich 22 anschließenden bzw. diesen fortsetzenden Gehäuse-Kanalbereichen 24, 26. In dem Gehäuse-Scheitelbereich 22 ist ein Reaktionsmittel-Aufnahmekanal 28 bereitgestellt. Vermittels einer in den Fig. 2 und 3 erkennbaren, allgemein auch als Injektor bezeichneten Reaktionsmittelabgabeanordnung 30 wird Reaktionsmittel, beispielsweise eine Harnstoff/Wasser-Lösung, in den im Gehäuse-Scheitelbereich 22 bereitgestellten Reaktionsmittel-Aufnahmekanal 28 eingespritzt. Dabei wird das Reaktionsmittel in Form eines in Fig. 3 dargestellten Sprühkegels S mit einer Reaktionsmittel-Hauptströmungsrichtung H_{R} in den Reaktionsmittel-Aufnahmekanal 28 eingespritzt.

Zur Anbindung der Reaktionsmittelabgabeanordnung 30 an das Kanalgehäuse 20 ist am Kanalgehäuse 20 im Bereich einer darin ausgebildeten Reaktionsmittel-Aufnahmeöffnung 33 ein Reaktionsmittel-Abgabestutzen 32 vorgesehen. An seinem vom Kanalgehäuse 20 entfernten Ende kann der Reaktionsmittel-Abgabestutzen 32 die Reaktionsmittelabgabeanordnung 30 aufnehmen.

Im Abgas-Sammelkörper 14 ist von einer Plattenmitte M zu einem Scheibenrand R versetzt eine Abgas-Sammelöffnung 34 ausgebildet. An die Abgas-Sammelöffnung 34 schließt ein Abgas-Sammelkanal 36 an, welcher im Gehäuse-Scheitelbereich 22 zum Reaktionsmittel-Aufnahmekanal 28 offen ist. Der Abgas-Sammelkanal 36 ist von einer Sammelkanal-Umfangswand 38 umgrenzt, welche in ihrem dem Abgas-Sammelkörper 12 nahe liegenden Bereich in einem abgerundeten Übergangsbereich 40 in den im Wesentlichen ebenen Abgas-Sammelkörper 12 übergeht.

Der Abgas-Sammelkörper 12 kann als Blech-Formteil beispielsweise mit dem abgerundeten Übergangsbereich 40 integral bereitgestellt sein. Der abgerundete Übergangsbereich kann in einem Umformungsvorgang als Durchzug bereitgestellt werden. An das aus der Ebene des Abgas-Sammelkörpers 12 bzw. der Anströmfläche 14 desselben herausstehenden Ende des abgerundeten

Übergangsbereichs kann die mit im Wesentlichen zylindrischer Kontur bereitgestellte Sammelkanal-Umfangswand 38 angrenzend positioniert sein und damit beispielsweise durch eine vorzugsweise umlaufende Schweißnaht fest verbunden sein. Eine Sammelkanal-Mittenachse As ist dabei vorzugsweise orthogonal zu einer durch die Anströmfläche 14 aufgespannten und zur Zeichenebene der Fig. 3 orthogonalen Ebene E_{A}.

An ihrem an das Kanalgehäuse 20 anschließenden Ende ist die Sammelkanal-Umfangswand 38 an die im Querschnitt beispielsweise näherungsweise kreisrunde Umfangskontur des Kanalgehäuses 20 angepasst und ist mit dem Kanalgehäuse 20 beispielsweise durch Verschweißung fest verbunden. Dabei kann die Sammelkanal-Umfangswand 38 durch Umformen eines ebenen Blechrohlings zu einer rohrartigen Gestalt bereitgestellt werden oder kann durch entsprechendes Ablängen eines Rohrstücks bereitgestellt werden.

Das Kanalgehäuse 20 kann aus mehreren Blech-Formteilen zusammengesetzt sein. Ein von dem Abgas-Sammelkörper 12 abgewandt liegendes unteres Gehäuseteil 42 kann aus einem Blechrohling im Wesentlichen derart als Halbschale geformt werden, dass es einerseits einen Teil des Gehäuse-Scheitelbereichs 20, andererseits jeweils Teile der Gehäuse-Kanalbereiche 24, 26 bereitstellt. Der dem Abgas-Sammelkörper 12 zugewandte Teil des Kanalgehäuses 20 kann beispielsweise mit zwei oberen Gehäuseteilen 44, 46 bereitgestellt sein, die zum Bereitstellen der beiden Gehäuse-Kanalbereiche 24, 26 mit dem unteren Gehäuseteil 42 beispielsweise durch Verschweißen verbunden werden können und im Gehäuse-Scheitelbereich 22 zwischen sich einen Raum zur Aufnahme der Sammelkanal-Umfangswand 38 belassen und auch mit dieser durch Verschweißung fest verbunden sein können. Alternativ könnte das Kanalgehäuse 20 durch ein gebogenes Rohrstück oder ein einziges in die rohrartige, gebogene Struktur umgeformtes Blech-Formteil bereitgestellt werden.

An den Gehäuse-Scheitelbereich 22 kann auch der Reaktionsmittel-Abgabestutzen 32 im Bereich der Reaktionsmittel-Aufnahmeöffnung 33 durch Verschweißung festgelegt werden, so dass beispielsweise die Sammelkanal-Mittenachse As und eine Abgabestutzen-Mittenachse A_{A} in einer der Zeichenebene der Fig. 3 entsprechenden Ebene liegen und näherungsweise orthogonal, also unter einem Winkel von näherungsweise 90° zueinander angeordnet sind. Wie die Fig. 3 dies andeutet, kann dieser Winkel auch etwas größer als 90° sein, so dass in der Darstellung der Fig. 3 die Reaktionsmittel-Hauptströmungsrichtung H_{R} eine einer Abgasströmungsrichtung im Abgas-Sammelkanal 36 entgegengesetzt orientierte Strömungsrichtungskomponente aufweist. Ferner ist die Anordnung vorzugsweise derart, dass die Sammelkanal-Mittenachse As orthogonal steht auf einer Gehäuse-Mittenebene E_{G}, welche beispielsweise aufgespannt sein kann durch in Fig. 1 erkennbare Abgabekanal-Mittenachsen A_{K1} und A_{K2} von in den beiden Gehäuse-Kanalbereichen 24, 26 jeweils bereitgestellten und an den Reaktionsmittel-Aufnahmekanal 28 anschließenden Abgabekanälen 48, 50. Jede dieser Abgabekanäle 48, 50 ist in seinem vom Reaktionsmittel-Aufnahmekanal 28 entfernten Ende über eine jeweilige Abgabeöffnung 52, 54 zur Abgabe eines Gemisches aus Abgas und Reaktionsmittel offen.

Im Abgas-Sammelkanal 36 sind mehrere zur Sammelkanal-Mittenachse As und zueinander im Wesentlichen parallel angeordnete, plattenartige Reaktionsmittel-Aufnahmeelemente 56 angeordnet. Diese können beispielsweise an der Sammelkanal-Umfangswand 38 durch Verschweißen festgelegt sein und weisen der Reaktionsmittel-Aufnahmeöffnung 33 im Kanalgehäuse 20 bzw. dem Reaktionsmittel-Abgabestutzen 32 zugewandt orientierte Reaktionsmittel-Aufnahmeflächen 58 auf. Die Reaktionsmittel-Aufnahmeelemente 56 greifen in den Reaktionsmittel-Aufnahmekanal 28 im Gehäuse-Scheitelbereich 22 des Kanalgehäuses 20 ein, wobei eine Eingriffstiefe der in Richtung von der Reaktionsmittel-Aufnahmeöffnung 33 weg aufeinanderfolgenden Reaktionsmittel-Aufnahmeelemente 56 bis zu einem Reaktionsmittel-Aufnahmeelement 56' mit maximaler Eingriffstiefe zunimmt. Somit stellt bis zu dem Reaktionsmittel-Aufnahmeelement 56' mit maximaler Eingriffstiefe jedes Reaktionsmittel-Aufnahmeelement 56 einen in Richtung zu der Reaktionsmittelabgabeanordnung 30 nicht von einem anderen Reaktionsmittel-Aufnahmeelement 56 überdeckten Bereich der jeweiligen Reaktionsmittel-Aufnahmefläche 58 bereit. Das von der Reaktionsmittelabgabeanordnung 30 in der Reaktionsmittel-Hauptströmungsrichtung H_{R} auf die Reaktionsmittel-Aufnahmeelemente 56 zu abgegebene Reaktionsmittel benetzt deren Oberfläche. Da die von Abgas umströmten Reaktionsmittel-Aufnahmeelemente 56 durch das heiße Abgas erwärmt sind, verdampft das oder zumindest ein wesentlicher Teil des Reaktionsmittels an den Reaktionsmittel-Aufnahmeflächen 58 und wird so durch das diese umströmende Abgas in den Reaktionsmittel-Aufnahmekanal 28 und über diesen in die beiden Abgabekanäle 48, 50 mitgeführt. Dabei wird die Durchmischung von Abgas und Reaktionsmittel auch durch die insbesondere im Bereich des Reaktionsmittel-Aufnahmekanals 28 erfolgende Strömungsumlenkung des den Abgas-Sammelkanal 36 durchströmenden Abgases und die dabei auftretende Verwirbelung unterstützt.

Die Fig. 2 und 3 veranschaulichen die Integration des Mischers 10 in eine allgemein mit 60 bezeichnete Abgasanlage. Ein Abgaskanal 62 der Abgasanlage 60 kann dabei beispielsweise bereitgestellt sein in einem stromaufwärts des Mischers 10 angeordneten Abgasrohr 64, in welchem beispielsweise auch eine Diesel-Oxidationskatalysatoranordnung 66 vorgesehen sein kann und einem stromabwärts des Mischers 10 angeordneten Abgasrohr 68, in welchem auch eine das Gemisch aus Reaktionsmittel und Abgas aufnehmende SCR-Katalysatoranordnung 70, ggf. auch eine Partikelfilteranordnung, angeordnet sein kann. Eine derartige Partikelfilteranordnung könnte alternativ oder zusätzlich auch stromaufwärts bezüglich des Mischers 10 angeordnet sein.

Der Abgaskanal 62 ist in dem zwischen den beiden Abgasrohren 64, 68 liegenden Bereich durch ein den Mischer 10 tragendes, rohrartiges Gehäuse 74 bereitgestellt. Beispielsweise kann der Mischer 10 vermittels des das Gehäuse 74 durchsetzenden Reaktionsmittel-Abgabestutzens 32 an dem Gehäuse 74 festgelegt sein und in dem Gehäuse 74 so positioniert sein, dass die Anströmfläche 14 des Abgas-Sammelkörpers 12 zu einer Abgas-Hauptströmungsrichtung H_{A} insbesondere stromaufwärts des Mischers 10 im Wesentlichen orthogonal steht und die Innenquerschnittsfläche des Gehäuses 74 im Wesentlichen vollständig überdeckt. Hierzu kann der Scheibenrand R des Abgas-Sammelkörpers 12 an eine Innenumfangsfläche des Gehäuses 74 anschließen oder mit geringem Abstand dazu positioniert sein.

Wie die Fig. 2 dies veranschaulicht, wird das das Abgasrohr 64 durchströmende Abgas G an der Anströmfläche 14 des Abgas-Sammelkörpers 12 in Richtung zur Abgas-Sammelöffnung 34 umgelenkt, durchströmt den Abgas-Sammelkanal 36 und wird im Reaktionsmittel-Aufnahmekanal 28 in Richtung zu den Abgabekanälen 48, 50 weiter umgelenkt. Das im Verlaufe dieser Durchströmung des Kanalgehäuses 20 generierte Gemisch aus Abgas und Reaktionsmittel verlässt die Abgabekanäle 48, 50 über deren Öffnungen 52, 54 und strömt dabei in Richtung auf die Innenoberfläche des den Mischer 10 tragenden Gehäuses 74 zu, wird auch dort noch einmal umgelenkt und strömt dann in das stromabwärts des Mischers 10 positionierte Abgasrohr 68 bzw. die darin vorgesehene SCR-Katalysatoranordnung 70.

Mit dem in den Fig. 1 bis 3 dargestellten Mischer wird bei einfachem Aufbau eine effiziente Vermischung von Abgas und Reaktionsmittel erreicht. Da einerseits der Abgas-Sammelkörper 12 eine an die Innenquerschnittsgeometrie des den Mischer 10 aufnehmenden Gehäuses 74 angepasste Außenumfangsgeometrie aufweist und auch das an der Rückseite 18 des Abgas-Sammelkörpers 12 und in Abstand dazu angeordnete Kanalgehäuse 20 mit seiner bogenförmigen Gestalt an die Innenumfangskontur des Gehäuses 74 angepasst ist und insbesondere an keinem Umfangsbereich über den Scheibenrand R des Abgas-Sammelkörpers 12 nach außen hervorsteht, wird bei kompakter Bauart eine gute Einpassbarkeit in das im Wesentlichen rohrartige bzw. zylindrische Gehäuse 74 erreicht.

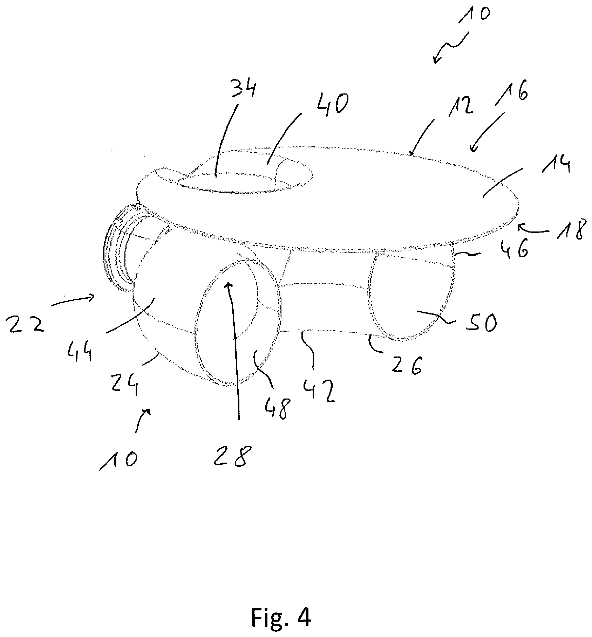

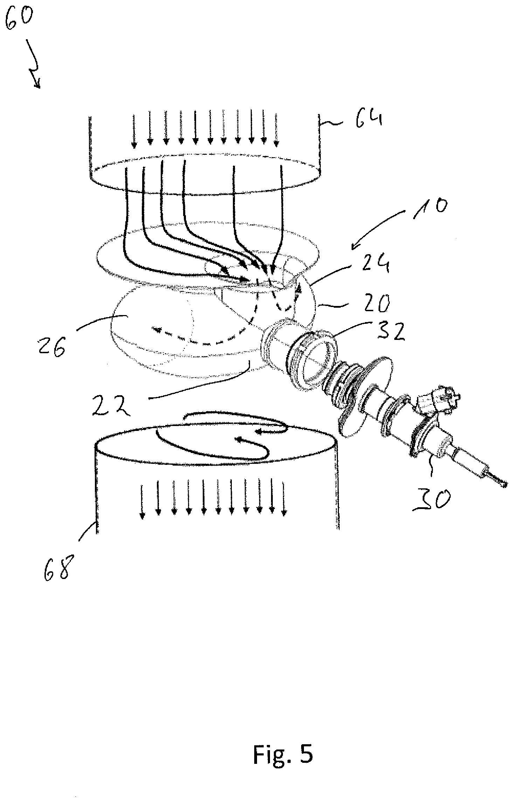

Eine alternative Ausgestaltungsart des Mischers 10 ist in den Fig. 4 und 5 dargestellt. Der Mischer 10 bzw. die diesen aufweisende Abgasanlage 60 weisen grundsätzlich den vorangehend mit Bezug auf die Fig. 1 bis 3 beschriebenen Aufbau auf, so dass auf die diesbezüglichen Ausführungen verwiesen werden kann. Zu erkennen ist aber, dass bei dem in den Fig. 4 und 5 dargestellten Mischer 10 im Abgas-Sammelkanal 36 keine plattenartigen Reaktionsmittel-Aufnahmeelemente vorgesehen sind. Das von der Anströmfläche 14 zur Abgas-Sammelöffnung 34 geleitete Abgas G strömt durch den Abgas-Sammelkanal 36 in den Reaktionsmittel-Aufnahmekanal 28, wird dort und in den dann folgenden Abgabekanälen 48, 50 mit Reaktionsmittel durchmischt und verlässt die Abgabekanäle über deren Öffnungen 52, 54.

Bei dieser Ausgestaltung liegt der Fokus auf der im Wesentlichen freien Durchströmbarkeit des Abgas-Sammelkanals und der primär durch Strömungsumlenkung und Verwirbelung erzeugten Vermischung von Abgas und Reaktionsmittel.

Es ist selbstverständlich, dass an den vorangehend beschriebenen Ausgestaltungen eines Mischers Variationen vorgenommen werden können, ohne von dem Aufbaukonzept der vorliegenden Erfindung abzuweichen. So können beispielsweise in dem Abgas-Sammelkörper oder/und im Kanalgehäuse jeweils eine oder mehrere Öffnungen vorgesehen sein, welche den Durchtritt von Abgas bzw. des im Kanalgehäuse gebildeten Gemisches aus Abgas und Reaktionsmittel zulassen. Auch kann die Anzahl der bei der Ausgestaltungsform der Fig. 1 bis 3 vorgesehenen Reaktionsmittel-Aufnahmeelemente anders sein, als dargestellt. Es könnten beispielsweise auch weniger oder nur ein einziges Reaktionsmittel-Aufnahmeelement vorgesehen sein. Auch könnte der Reaktionsmittel-Abgabekörper beispielsweise mit einer konkaven Gestalt bzw. einer entsprechend konkav geformten Anströmfläche ausgebildet sein, so dass eine noch effizientere Umlenkung in Richtung zur Abgas-Sammelöffnung erfolgt. Insbesondere bei der Ausgestaltung des Abgas-Sammelkörpers mit dem abgerundeten Übergangsbereich als ein Umformteil kann es aufgrund des Umformungsvorgangs vorteilhaft bzw. erforderlich sein, in demjenigen Bereich, in welchem die Abgas-Sammelöffnung den geringsten Abstand zum Scheibenrand aufweist, zum Bereitstellen des abgerundeten Übergangsbereichs eine in den Figuren erkennbare Einsenkung in der in Richtung stromaufwärts orientierten Anströmfläche bereitzustellen. Dies ist vor allem dann der Fall, wenn die Abgas-Sammelöffnung sehr nahe am Scheibenrand vorzusehen ist. Alternativ könnte auch in diesem Bereich bei etwas weiter vom Scheibenrand weg liegender Abgas-Sammelöffnung die die Abgas-Sammelöffnung bzw. den abgerundeten Übergangsbereich umgebende Anströmfläche vollständig eben ausgebildet sein. Die Abgabekanäle können auch mit anderer Querschnittsgeometrie, beispielsweise oval bzw. abgeflacht rund, ausgebildet sein.

## Patentansprüche

1. Mischer zur Durchmischung von in einem Abgaskanal einer Brennkraftmaschine strömendem Abgas mit in den Abgaskanal eingespritztem Reaktionsmittel, umfassend
- einen plattenartigen Abgas-Sammelkörper (12) mit einer Anströmfläche (14) an einer Abgasanströmseite (16) und einer von der Anströmseite (10) abgewandten Rückseite (18),
- ein an der Rückseite (18) des Abgas-Sammelkörpers (12) angeordnetes Kanalgehäuse (20) mit einem Reaktionsmittelaufnahmekanal (28) und wenigstens einem von dem Reaktionsmittelaufnahmekanal (28) weg führenden Abgabekanal (48, 50) in dem Kanalgehäuse (20),
wobei in dem Abgas-Sammelkörper (12) eine Abgas-Sammelöffnung (34) ausgebildet ist, und wobei ein Abgas-Sammelkanal (36) von der Abgas-Sammelöffnung (34) zu dem Kanalgehäuse (20) führt und zu dem Reaktionsmittel-Aufnahmekanal (28) offen ist,
**dadurch gekennzeichnet, dass** das Kanalgehäuse (20) eine U-förmige oder bogensegmentförmige Gestalt aufweist mit einem im Wesentlichen den Reaktionsmittel-Aufnahmekanal (28) bereitstellenden Gehäuse-Scheitelbereich (22) und zwei an den Gehäuse-Scheitelbereich (22) anschließenden und jeweils einen Abgabekanal (48, 50) bereitstellenden Gehäuse-Kanalbereichen (24, 26), und dass der Abgas-Sammelkanal (36) im Gehäuse-Scheitelbereich (22) zu dem Reaktionsmittel-Aufnahmekanal (28) offen ist.

2. Mischer nach Anspruch 1, **dadurch gekennzeichnet, dass** der Abgas-Sammelkörper (12) eine runde, vorzugsweise kreisrunde, Außenumfangskontur aufweist, oder/und dass die Abgas-Sammelöffnung (34) bezüglich einer Plattenmitte (M) des Abgas-Sammelkörpers (12) zu einem Plattenrand (R) des Abgas-Sammelkörpers (12) hin versetzt angeordnet ist, oder/und dass das Kanalgehäuse (20) in Abstand zu der Rückseite (18) des Abgas-Sammelkörpers (12) angeordnet ist.

3. Mischer nach Anspruch 1 oder 2, **dadurch gekennzeichnet, dass** eine Sammelkanal-Umfangswand (38) des Abgas-Sammelkanals (36) in einem abgerundeten Übergangsbereich (40) in den plattenartigen Abgas-Sammelkörper (12) übergeht.

4. Mischer nach Anspruch 3, **dadurch gekennzeichnet, dass** wenigstens ein Teil des Übergangsbereichs (40), vorzugsweise der gesamte Übergangsbereich (40), mit dem Abgas-Sammelkörper (12) einstückig ausgebildet ist.

5. Mischer nach Anspruch 3 oder 4, **dadurch gekennzeichnet, dass** wenigstens ein Teil des Übergangsbereichs (40), vorzugsweise der gesamte Übergangsbereich (40), mit der Sammelkanal-Umfangswand (38) einstückig ausgebildet ist.

6. Mischer nach einem der vorangehenden Ansprüche, **dadurch gekennzeichnet, dass** eine Sammelkanal-Mittenachse (As) des Abgas-Sammelkanals (36) im Wesentlichen orthogonal zu der Anströmfläche (14) ist.

7. Mischer nach einem der vorangehenden Ansprüche, **dadurch gekennzeichnet, dass** im Gehäuse-Scheitelbereich ein im Bereich einer Reaktionsmittel-Aufnahmeöffnung (33) des Kanalgehäuses (20) zu dem Reaktionsmittel-Aufnahmekanal (28) offener Reaktionsmittel-Abgabestutzen (32) am Kanalgehäuse (20) angeordnet ist.

8. Mischer nach Anspruch 7, **dadurch gekennzeichnet, dass** eine Abgabestutzen-Mittenachse (A_{A}) des Reaktionsmittel-Abgabestutzens (32) und eine Sammelkanal-Mittenachse (As) des Abgas-Sammelkanals (36) zueinander im Wesentlichen orthogonal sind oder/und in einer Ebene liegen.

9. Mischer nach einem der vorangehenden Ansprüche, **dadurch gekennzeichnet, dass** eine eine Abgabekanal-Mittenachse (A_{K1}, A_{K2}) des wenigstens einen Abgabekanals (48, 50) enthaltende Gehäuse-Mittenebene (E_{G}) des Kanalgehäuses (20) zu der Anströmfläche (14) im Wesentlichen parallel ist.

10. Mischer nach einem der vorangehenden Ansprüche, **dadurch gekennzeichnet, dass** in dem Abgas-Sammelkanal (36) wenigstens ein, vorzugsweise eine Mehrzahl von in den Reaktionsmittel-Aufnahmekanal (28) sich hinein erstreckenden, plattenartigen Reaktionsmittel-Aufnahmeelementen (56) vorgesehen ist.

11. Mischer nach Anspruch 7 und Anspruch 10, **dadurch gekennzeichnet, dass** in dem Abgas-Sammelkanal (36) eine Mehrzahl von in Richtung von der Reaktionsmittel-Aufnahmeöffnung (33) weg aufeinanderfolgend angeordneten Reaktionsmittel-Aufnahmeelementen (56) vorgesehen ist, und dass eine Eingriffstiefe der Reaktionsmittel-Aufnahmeelemente (56) in den Reaktionsmittel-Aufnahmekanal (28) in Richtung von der Reaktionsmittel-Aufnahmeöffnung (33) weg bis zu einem Reaktionsmittel-Aufnahmeelement (56') mit maximaler Eingriffstiefe zunimmt.

12. Mischer nach einem der vorangehenden Ansprüche, **dadurch gekennzeichnet, dass** der Abgas-Sammelkörper (12) als Blech-Formteil bereitgestellt ist, oder/und dass das Kanalgehäuse (20) mit wenigstens zwei, vorzugsweise drei Blech-Formteilen (42, 44, 46) bereitgestellt ist, oder/und dass eine den Abgas-Sammelkanal (36) umgebende Sammelkanal-Umfangswand (38) mit wenigstens einem Blech-Formteil bereitgestellt ist.

13. Abgasanlage für eine Brennkraftmaschine, umfassend einen Abgaskanal, einen in dem Abgaskanal (62) angeordneten Mischer (10) nach einem der vorangehenden Ansprüche und eine Reaktionsmittel-Abgabeanordnung (30) zum Abgeben von Reaktionsmittel in den Reaktionsmittel-Aufnahmekanal (28) des Mischers (10).

14. Abgasanlage nach Anspruch 13, **dadurch gekennzeichnet, dass** der Abgas-Sammelkörper (12) mit seiner Anströmfläche (14) im Wesentlichen orthogonal zu einer Abgas-Hauptströmungsrichtung (H_{A}) im Abgaskanal (62) angeordnet ist, oder/und dass der Abgas-Sammelkörper (12) den Abgaskanal (62) in einem den Mischer (10) aufnehmenden Gehäuse (74) quer zu der Abgas-Hauptströmungsrichtung (H_{A}) im Wesentlichen vollständig überdeckt.

15. Abgasanlage nach Anspruch 13 oder 14, **dadurch gekennzeichnet, dass** stromaufwärts des Mischers (10) eine Oxidationskatalysatoranordnung, vorzugsweise Diesel-Oxidationskatalysatoranordnung (66), vorgesehen ist, oder/und dass stromabwärts des Mischers (10) eine SCR-Katalysatoranordnung (70) oder/und eine Partikelfilteranordnung vorgesehen ist.

## Claims

1. Mixer for mixing exhaust gas flowing in an exhaust gas duct of an internal combustion engine with reactant injected into the exhaust gas duct, comprising
- a plate-like exhaust gas collection body (12) with an incoming flow surface (14) on an exhaust gas incoming flow side (16) and with a rear side (18) facing away from the incoming flow side (10),
- a duct housing (20) arranged on the rear side (18) of the exhaust gas collection body (12) with a reactant-receiving duct (28) and with at least one release duct (48, 50) leading away from the reactant-receiving duct (28) in the duct housing
(20), wherein an exhaust gas collection opening (34) is formed in the exhaust gas collection body (12), and wherein an exhaust gas collection duct (36) leads from the exhaust gas collection opening (34) to the duct housing (20) and is open to the reactant-receiving duct (28),
**characterized in that** the duct housing (20) has a U-like or arc segment-like shape with a housing apex area (22) providing essentially the reactant-receiving duct (28) and two housing duct areas (24, 26), which adjoin the housing apex area (22) and provide a respective release duct (48, 50) each, and that the exhaust gas collection duct (36) is open in the housing apex area (22) to the reactant-receiving duct (28).

2. Mixer in accordance with claim 1, **characterized in that** the exhaust gas collection body (12) has a round, preferably circular, outer circumferential contour, and/or that the exhaust gas collection opening (34) is arranged offset in relation to a plate center (M) of the exhaust gas collection body (12), or/and that the duct housing (20) is arranged at a spaced location from the rear side (18) of the exhaust gas collection body (12).

3. Mixer in accordance with claim 1 or 2, **characterized in that** a collection duct circumferential wall (38) of the exhaust gas collection duct (36) passes over into the plate-like exhaust gas collection body (12) in a rounded transition area (40).

4. Mixer in accordance with claim 3, **characterized in that** at least one part of the transition area (40), preferably the entire transition area (40), is made in one piece with the exhaust gas collection body (12).

5. Mixer in accordance with claim 3 or 4, **characterized in that** at least one part of the transition area (40), preferably the entire transition area (40), is made in one piece with the collection duct circumferential wall (38).

6. Mixer in accordance with one of the preceding claims, **characterized in that** a collection duct central axis (A_{S}) of the exhaust gas collection duct (36) is essentially at right angles to the incoming flow surface (14).

7. Mixer in accordance with one of the preceding claims, **characterized in that** in the housing apex area a reactant release pipe (32) open to the reactant-receiving duct (28) in the area of a reactant-receiving opening (33) of the duct housing (20) is arranged at the duct housing (20).

8. Mixer in accordance with claim 7, **characterized in that** a release pipe central axis (A_{A}) of the reactant release pipe (32) and a collection duct central axis (As) of the exhaust gas collection duct (36) are essentially at right angles to one another or/and are located in one plane.

9. Mixer in accordance with one of the preceding claims, **characterized in that** a housing central plane (E_{G}) of the duct housing (20), which central plane contains a release duct central axis (A_{K1}, A_{K2}) of the at least one release duct (48, 50), is essentially parallel to the incoming flow surface (14).

10. Mixer in accordance with one of the preceding claims, **characterized in that** at least one plate-like reactant-receiving element (56) and preferably a plurality of plate-like reactant-receiving elements (56) extending into the reactant-receiving duct (28) is/are provided in the exhaust gas collection duct (36).

11. Mixer in accordance with claim 7 and claim 10, **characterized in that** a plurality of reactant-receiving elements (56) arranged following one another in the direction away from the reactant-receiving opening (33) are provided in the exhaust gas collection duct (36), and that a depth of meshing of the reactant-receiving elements (56) with the reactant-receiving duct (28) increases in the direction away from the reactant-receiving opening (33) up to a reactant-receiving element (56') with maximum depth of meshing.

12. Mixer in accordance with one of the preceding claims, **characterized in that** the exhaust gas collection body (12) is configured as a shaped sheet metal part, or/and that the duct housing (20) is provided with at least two and preferably three shaped sheet metal parts (42, 44, 46), or/and that a collection duct circumferential wall (38) delimiting the exhaust gas collection duct (36) is provided with at least one shaped sheet metal part.

13. Exhaust system for an internal combustion engine, comprising an exhaust gas duct, a mixer (10) according to one of the preceding claims, which is arranged in the exhaust gas duct (62), and a reactant release device (30) for releasing reactant into the reactant-receiving duct (28) of the mixer (10).

14. Exhaust system in accordance with claim 13, **characterized in that** the exhaust gas collection body (12) is arranged with its incoming flow surface (14) essentially at right angles to an exhaust gas main flow direction (H_{A}) in the exhaust gas duct (62), or/and that the exhaust gas collection body (12) covers the exhaust gas duct (62) essentially fully in a housing (74) accommodating the mixer (10) at right angles to the exhaust gas main flow direction (H_{A}).

15. Exhaust system in accordance with claim 13 or 14, **characterized in that** an oxidation catalytic converter device, preferably a diesel oxidation catalytic converter device (66), is provided upstream of the mixer (10), or/and that an SCR catalytic converter device (70) or/and a particle filter device is provided downstream of the mixer (10).

## Revendications

1. Mélangeur pour mélanger les gaz d'échappement s'écoulant dans un conduit de gaz d'échappement d'un moteur à combustion interne avec un réactif injecté dans le conduit de gaz d'échappement, comprenant
- un corps de collecte de gaz d'échappement en forme de plaque (12) avec une surface d'écoulement entrant (14) sur un côté d'écoulement entrant des gaz d'échappement (16) et avec un côté arrière (18) orienté à l'opposé du côté d'écoulement entrant (10),
- un boîtier de conduit (20) disposé sur le côté arrière (18) du corps de collecte de gaz d'échappement (12) avec un conduit de réception de réactif (28) et avec au moins un conduit de décharge (48, 50) s'éloignant du conduit de réception de réactif (28) dans le boîtier de conduit (20), dans lequel une ouverture de collecte de gaz d'échappement (34) est formée dans le corps de collecte de gaz d'échappement (12), et dans lequel un conduit de collecte de gaz d'échappement (36) mène de l'ouverture de collecte de gaz d'échappement (34) au boîtier de conduit (20) et est ouvert sur le conduit de réception de réactif (28), **caractérisé en ce que** le boîtier de conduit (20) a une forme de U ou de segment d'arc avec une zone de sommet de boîtier (22) fournissant essentiellement le conduit de réception de réactif (28) et deux zones de conduit de boîtier (24, 26), qui sont adjacentes à la zone de sommet de boîtier (22) et fournissent chacune un conduit de décharge (48, 50), et **en ce que** le conduit de collecte de gaz d'échappement (36) est ouvert dans la zone de sommet de boîtier (22) vers le conduit de réception de réactif (28).

2. Mélangeur selon la revendication 1, **caractérisé en ce que** le corps de collecte de gaz d'échappement (12) présente un contour circonférentiel extérieur rond, de préférence circulaire, et/ou **en ce que** l'ouverture de collecte de gaz d'échappement (34) est disposée de manière décalée par rapport à un centre de plaque (M) du corps de collecte de gaz d'échappement (12), et/ou **en ce que** le boîtier de conduit (20) est disposé à distance du côté arrière (18) du corps de collecte de gaz d'échappement (12).

3. Mélangeur selon la revendication 1 ou 2, **caractérisé en ce qu'**une paroi périphérique (38) du conduit de collecte de gaz d'échappement (36) passe dans le corps de collecte de gaz d'échappement en forme de plaque (12) dans une zone de transition arrondie (40).

4. Mélangeur selon la revendication 3, **caractérisé en ce qu'**au moins une partie de la zone de transition (40), de préférence la totalité de la zone de transition (40), est réalisée d'une seule pièce avec le corps de collecte de gaz d'échappement (12).

5. Mélangeur selon la revendication 3 ou 4, **caractérisé en ce qu'**au moins une partie de la zone de transition (40), de préférence toute la zone de transition (40), est réalisée en une seule pièce avec la paroi circonférentielle du conduit de collecte (38).

6. Mélangeur selon l'une des revendications précédentes, **caractérisé en ce qu'**un axe central (As) du conduit de collecte de gaz d'échappement (36) est essentiellement à angle droit par rapport à la surface d'écoulement entrant (14).

7. Mélangeur selon l'une des revendications précédentes, **caractérisé en ce que** dans la zone de sommet de boîtier, un tuyau de décharge de réactif (32) ouvert vers le conduit de réception de réactif (28) dans la zone d'une ouverture de réception de réactif (33) du boîtier de conduit (20) est disposé au boîtier de conduit (20).

8. Mélangeur selon la revendication 7, **caractérisé en ce qu'**un axe central (A_{A}) du tuyau de décharge de réactif (32) et un axe central (As) du tuyau de collecte de gaz d'échappement (36) sont essentiellement à angle droit l'un par rapport à l'autre ou/et sont situés dans un plan.

9. Mélangeur selon l'une des revendications précédentes, **caractérisé en ce qu'**un plan central de boîtier (E_{G}) du boîtier de conduit (20), lequel plan central contient un axe central de conduit de décharge (A_{K1}, A_{K2}) dudit au moins un conduit de décharge (48, 50), est essentiellement parallèle à la surface d'écoulement entrant (14).

10. Mélangeur selon l'une des revendications précédentes, **caractérisé en ce qu'**au moins un élément de réception de réactif (56) en forme de plaque et de préférence plusieurs éléments de réception de réactif (56) en forme de plaque s'étendant dans le conduit de réception de réactif (28) est/sont prévu(s) dans le conduit de collecte de gaz d'échappement (36).

11. Mélangeur selon la revendication 7 et la revendication 10, **caractérisé en ce que** dans le conduit de collecte de gaz d'échappement (36) une pluralité d'éléments de réception de réactif (56) sont prévus, disposés les uns à la suite des autres dans la direction opposée à l'ouverture de réception de réactif (33), et **en ce qu'**une profondeur d'engrènement des éléments de réception de réactif (56) avec le conduit de réception de réactif (28) augmente dans la direction opposée à l'ouverture de réception de réactif (33) jusqu'à un élément de réception de réactif (56') ayant une profondeur d'engrènement maximale.

12. Mélangeur selon l'une des revendications précédentes, **caractérisé en ce que** le corps de collecte de gaz d'échappement (12) est configuré comme une pièce de tôle profilée, ou/et que le boîtier de conduit (20) est pourvu d'au moins deux et de préférence trois pièces de tôle profilée (42, 44, 46), ou/et qu'une paroi circonférentielle du conduit de collecte (38) délimitant le conduit de collecte de gaz d'échappement (36) est pourvue d'au moins une pièce de tôle profilée.

13. Système d'échappement pour un moteur à combustion interne, comprenant un conduit de gaz d'échappement, un mélangeur (10) selon l'une des revendications précédentes, qui est disposé dans le conduit de gaz d'échappement (62), et un dispositif de décharge de réactif (30) pour décharger le réactif dans le conduit de réception de réactif (28) du mélangeur (10).

14. Système d'échappement selon la revendication 13, **caractérisé en ce que** le corps de collecte de gaz d'échappement (12) est disposé avec sa surface d'écoulement entrant (14) essentiellement à angle droit par rapport à une direction d'écoulement principale des gaz d'échappement (H_{A}) dans le conduit de gaz d'échappement (62), ou/et **en ce que** le corps de collecte de gaz d'échappement (12) recouvre essentiellement entièrement le conduit de gaz d'échappement (62) dans un boîtier (74) recevant le mélangeur (10) à angle droit par rapport à la direction d'écoulement principale des gaz d'échappement (H_{A}).

15. Système d'échappement selon la revendication 13 ou 14, **caractérisé en ce qu'**un dispositif de catalyseur d'oxydation, de préférence un dispositif de catalyseur d'oxydation diesel (66), est prévu en amont du mélangeur (10), et/ou **en ce qu'**un dispositif de catalyseur SCR (70) et/ou un dispositif de filtre à particules est prévu en aval du mélangeur (10).
